# EUROPEAN PATENT APPLICATION

(11) **EP 3 536 737 A1**
(43) Date of publication of application: **11.09.2019**
(21) Application number: 18160792.0
(22) Date of filing: 08.03.2018
(51) Int. Cl.: C08J 7/06, D06P 1/30, B29C 64/00, C09B 49/00

(54) **METHOD FOR DYEING A PLASTIC OBJECT**

(71) Applicant: Archroma IP GmbH, 4153 Reinach (CH)
(72) Inventor: CALLAS, Carmen, 4303 Kaiseraugst (CH); DOMINGO FARRÉ, Manuel José, 08025 Barcelona (ES); NUSSER, Rainer, 79395 Neuenburg am Rhein (DE); KOHLER, Achim, 74081 Heilbronn (DE); MARAZZI, Rino, 4133 Pratteln (CH)
(74) Representative: Ricker, Mathias

(57) **Abstract**

The present application relates to a method for treating at least one surface of a plastic object wherein the method comprises at least one dyeing step, wherein at least one sulfur dye is used in the at least one dyeing step. The present invention further relates to the plastic object wherein at least one surface of the plastic object is treated with the method according to the invention. It also relates to the use of a sulfur dye for dyeing a plastic object.

## Description

### FIELD OF THE INVENTION

The present application relates to a method for treating at least one surface of a plastic object wherein the method comprises at least one dyeing step, wherein at least one sulfur dye is used in the at least one dyeing step. The present invention further relates to the plastic object wherein at least one surface of the plastic object is treated with the method according to the invention. It also relates to the use of a sulfur dye for dyeing a plastic object.

### BACKGROUND OF THE INVENTION

Plastic objects are indispensable articles of daily use. Plastic objects are sometimes hidden from the view if for example used in engines, whereas other plastic objects are used as e.g. as design objects, like for example lamp shades. Independently of the use of the plastic objects, they all have in common that they are made of polymers. The original colors of plastic objects made of polymers are usually not very attractive. For example plastic objects made of polyamides are either black or have a dirty white color. If a plastic object should however be used as a design object, such colors are of course unfavorable. Therefore, plastic objects are dyed.

In essence there are two different ways of obtaining dyed plastic objects. One possibility is to use a masterbatch for the manufacturing of a dyed plastic object. If a masterbatch is used, e.g dyes in form of pigments or other dyes are added to the untreated, raw polymer. This mixture is then molten in an extruder and subsequently granulated. The thus formed masterbatch can then be used to make dyed plastic objects. The disadvantage is that the masterbatch has to be made first, and care must be taken during the masterbatch manufacturing that the used pigments are distributed homogeneously within the raw polymer.

Another possibility to get a dyed plastic object is the dyeing of the surface of the shaped plastic object. Surface dyeing of shaped plastic objects are usually done in dyeing bathes. Dyeing bathes are made by dissolving, respectively dispersing a dye, for example selected from acid dyes, disperse dyes, direct dyes, reactive dyes, or metal complex dyes, in a solvent together with dyeing auxiliaries like leveling agents, dispersants, or defoamers. The shaped plastic object is then put into this dyeing bath at a certain temperature and left there for a certain time. When the shaped plastic object is removed from the dyeing bath, all surfaces which were contacted with the dyeing bath are dyed. Methods for surface dyeing of shaped plastic objects are for example described in WO 2015/124639 or WO 2011/089208.

The advantage is that this is a very easy and quick method to obtain dyed plastic objects. The disadvantage is, however, that the disposal of the used dyeing bath is rather difficult. The used dyeing bath cannot be used again for further dyeing, since the concentration of the dye in the bath has changed. Further, some dyes are rather sensitive and start decomposing in the dyeing bath after a certain time. The dyeing bath however cannot be simply disposed into the environment, since the dyes are sometimes hazardous for same. It is therefore usually tried to recover the dye from the dyeing bath to either use it again in a freshly made dyeing bath, or to dispose it in an appropriate way.

### OBJECT OF THE INVENTION

It was therefore an object of the present invention to provide a method for dyeing plastic objects overcoming the drawbacks of the above described dyeing methods.

### SUMMARY OF THE INVENTION

The object is solved by a method for treating at least one surface of a plastic object, wherein the method comprises at least one dyeing step, wherein in the at least one dyeing step at least one sulfur dye is used.

According to one aspect of the method according to the invention, the dyeing step is conducted by contacting the at least one surface of the plastic object with the at least one sulfur dye, preferably in a dyeing bath.

According to one aspect of the method according to the invention, the dyeing step is performed at a temperature of at least 20°C, or at least 30°C, or at least 40°C, or at least 50°C, or at least 60°C, or at least 70°C, and at most 80°C, or at most 90°C, or at most 100°C, or at most 110°C, or at most 120°C, or at most 130°C, or at most 140°C, or at most 150°C.

According to one aspect of the method according to the invention, the at least one sulfur dye is at least partly dissolved in water.

According to one aspect of the method according to the invention, the dyeing step is conducted as continuous dyeing or as exhaust dyeing.

According to one aspect of the method according to the invention, the dyeing step lasts at least 1 second, or at least 10 seconds, or at least 30 seconds, or at least 1 minute, or at least 5 minutes, or at least 10 minutes, or at least 20 minutes, or at least 30 minutes, or at least 40 minutes, or at least 50 minutes, and at most 60 minutes, or at most 70 minutes, or at most 80 minutes, or at most 90 minutes, or at most 100 minutes, or at most 110 minutes, or at most 120 minutes.

According to one aspect of the method according to the invention, the method further comprises at least one further step wherein at least one surface of the plastic object is further treated chemically, and/or physically, and/or mechanically.

According to one aspect of the method according to the invention, the at least one further step is conducted either prior to the at least one dyeing step, or simultaneously to the at least one dyeing, or after the at least one dyeing step.

According to one aspect of the method according to the invention, the at least one sulfur dye is a dye which is obtained by heating organic compounds with sulfur or alkali polysulfide, wherein the organic compounds can be derived from renewable vegetal waste or from aromatic compounds.

According to one aspect of the method according to the invention, the at least one sulfur dye is treated with a reducing agent.

According to one aspect of the method according to the invention, the reducing agent is selected from a sugar, hydroxyacetone, sodium thioglycolate, sodium borohydride, thiourea dioxide or aldehyde sulfoxylate, or combinations thereof.

According to one aspect of the method according to the invention, the plastic object is made from polyimide, polyamidimide, polyphthalamide, polyetherimide, polymethacrylimide, liquid crystal polymer, polyethersulfone, polyphenylenesulfide, polymethylmethacrylimide, polyamide, polyamide 4.10, polyamide 6.10, polyamide 10.10, polyamide 6.6, polyamide 4.6, polyamide 10.10, polyamide 10.12, polyamide 11, polyamide 6 (AP 6), polyamide 12 (AP 12), polyisopropyliden diphenylene terephthalate / isoterephthalate copolymer, polyphenylene ether, polyurethane, polyoxymethylene (POM), styrene acrylonitrile, polylactic acid (PLA), polycarbonate (PC), polymethyl methacrylate (PMMA), polyphenylsulfone (PPSU), polysulfone (PSU), polyether ketone (PEEK), polyoxymethylene, polyethylene (PE), polypropylene (PP), polyvinylchloride, polyethylene terephthalate (PET), polyethylene terephthalate with glycol (PETG), polystyrol, polyurethane, acrylnitril-butadien-styrol, polybutylene terephthalate, styrol acrylonitrile, polyethylene furonate, cellulose ester, polyhydroxylbutanoic acid, polycaprolactone, polybutyrate adipate terephthalate, polybutylene succinate, polyphenylsulfone (PS), polyvinyl acetate, polyvinylidene chloride, acrylonitrile butadiene styrene (ABS), polyether etherketone, epoxy resins, thermoplastic elastomers (TPE-E), thermoplastic copolyamide (TPE-A), thermoplastic polyesterelastomer / thermoplastic copolyester (TPE-E), thermoplastic elastomer on olefinbasis (TPE-O), styrol-blockcopolymers (TPE-S), thermoplastic elastomers on urethanebasis (TPE-U), thermoplastic, cross-linked elastomers on olefinbasis (TPE-V), polybutylene terephthalate (PBT), polytrimethylene terephthalate (PTT) or mixtures thereof.

According to one aspect of the method according to the invention, the method further comprises oxidizing of at least one surface of the plastic object which was dyed in the dyeing step after the dyeing step is completed.

According to one aspect of the method according to the invention, the method further comprises a step of manufacturing the plastic object by a 3D printing method, preferably by selective laser sintering (SLS), stereolithography (SLA), 3-dimensional inkjet printing, fused deposition modelling (FDM), digital light processing (DLP), Multijet & polyjet process, binder jetting (BJ), selective deposition lamination (SDL), electrobeam melting (EBM), selective laser melting (SLM), laminated object manufacturing (LOM).

According to one aspect of the method according to the invention, the at least one dyeing step is performed in a device being part of or directly connected to a device for conducting said 3D printing method.

Another aspect of the present application encompasses a plastic object, wherein at least one surface has been treated with the method according to the invention.

In one embodiment, the plastic object is an object formed by a 3D-printing method, preferably by selective laser sintering (SLS), stereolithography (SLA), 3-dimensional inkjet printing, fused deposition modelling (FDM), digital light processing (DLP), Multijet & polyjet process, binder jetting (BJ), selective deposition lamination (SDL), electrobeam melting (EBM), selective laser melting (SLM), laminated object manufacturing (LOM).

Another aspect of the present application encompasses the use of at least one sulfur dye or a dyeing solution comprising the at least one sulfur dye for dyeing at least one surface of a plastic object.

### DETAILED DESCRIPTION OF THE INVENTION

The object is solved by providing a method for treating at least one surface of a plastic object, wherein the method comprises at least one dyeing step, wherein in the at least one dyeing step at least one sulfur dye is used.

The method according to the invention has the advantage that no masterbatch has to be made. Thus, since only these surfaces are dyed which can be seen, less dye is necessary compared to methods using a masterbatch. Further, the use of sulfur dyes has the advantage that these are non-toxic dyes, i.e. sulfur dyes do not contain metal (ions) or halogens and are considered as polymeric dyes having a high molecular weight and thus as being safe and toxicological harmless. Furthermore, the sulfur dye used in the dyeing solution, like the dyeing bath can be easily recovered e.g. by neutralization and optional addition of a precipitating agent like iron cations- or alumina cations containing agents or by oxidation whereby the sulfur dye is recovered in form of a pigment which can be reused. Thus, dye-free water effluent is easily achievable. In addition, a dyeing solution containing sulfur dye(s) has the advantage that it can be re-used, since sulfur dyes are very stable. The dyeing solution after having been used in for the at least one dyeing step can be stored in a closed container until further use. The amount of sulfur dye remaining in the dyeing solution can be determined, and, if necessary, further dye can be added until the desired dye concentration is achieved. Consequently, no sulfur dye has to be disposed after the dyeing solution was used.

It is particularly preferred that in the method according to the invention that in the at least one dyeing step no dyes other than sulfur dyes are used.

Under the term *"treating"* or *"treatment"* within the context of the present application it is to be understood that the condition of the at least one surface of the plastic object treated with the method according to the invention differs from the condition this at least one surface had prior to the treatment according to the method according to the invention. The difference can be seen for example in a different haptic condition, and/or a different visual condition, and/or a different physical condition. A visual difference is for example that the color of the surface treated with the method according to the invention is different from the color of the surface prior to the treatment with the method according to the invention. A haptic difference is for example that the surface treated with the method according to the invention is different, e.g. is rougher or smoother than the surface prior to the treatment with the method according to the invention. A physical difference is for example that the surface treated with the method according to the invention has water and/or oil and/or chemical repellant properties or is equipped with UV protective means compared to the surface prior to the treatment with the method according to the invention.

Under the term *"plastic object"* within the context of the present application a 2- or 3-dimensional object of a particular shape at least partly made of at least one polymer is to be understood. The term *"plastic object"* within the context of the present application does not include textile fiber as used for textile. The shape of the 2- or 3-dimensional objects depends on the purpose for which it will be used. It is preferred that the plastic object is a 3-dimensional object. Since the plastic object is a two or three dimensional object, it comprises at least one surface, or at least two surfaces, or at least three surfaces, or at least four surfaces, or at least five surfaces, or at least six surfaces, or at least seven surfaces, or at least eight surfaces, or at least ten surfaces, or at least 15 surfaces, or at least 20 surfaces, or at least 25 surfaces, or even at least 50 surfaces, or at least 100 surfaces. E.g. if the plastic object is a 3-dimensional object in form of a cube, the plastic object has six surfaces. If e.g. the plastic object is a 2-dimensional object in form of a sheet, the plastic object has two surfaces. If e.g. the plastic object is a 3-dimensional object in form of a ball, the plastic object has one surface. Each surface of the plastic object can be treated separately with the method according to the invention, or all surfaces of the plastic object can be treated at the same time with the method according to the invention, or only one surface of the plastic object is treated with the method according to the invention. Further, it is possible that each surface of the plastic object is treated with a different embodiment of the method according to the invention (e.g. one surface is dyed with a yellow dye, and another one is treated with a red dye, and/or one surface is smoothened, while another surface is roughened), or all surfaces of the plastic object are treated with the same embodiment of the method according to the invention.

A further aspect of the present application therefore also covers the plastic object which is obtained by treating at least one surface with the method according to the invention including all above and below described embodiments of the method according to the invention.

The plastic object used in the method according to the invention can be formed by any traditional method known in the state of the art, like molding methods. Further, the plastic object can be formed by newly developed methods like 3D-printing methods. Commonly known 3D-printing methods are for example binder jetting, triple jetting (also referred to as PolyJet, MultiJet), stereolithography (SLA), digital light processing (DLP), multijet printing, fused deposition modelling (FDM), selective heat sintering (SHS), selective laser sintering (SLS), laminated object manufacturing (LOM), wax deposition modeling (WDM), 3-dimensional inkjet printing (3DP), thermoplastic extrusion, smooth curvature printing, selective deposition lamination, hybrid CNC, fused filament fabrication (FFF).

The plastic object can further comprise, next to the at least one polymer, other materials like metals or ceramics.

The at least one polymer from which the plastic object is at least partly made is selected from polyimide, polyamidimide, polyphthalamide, polyetherimide, polymethacrylimide, liquid crystal polymer, polyethersulfone, polyphenylenesulfide, polymethylmethacrylimide, polyamide, polyamide 4.10, polyamide 6.10, polyamide 10.10, polyamide 6.6, polyamide 4.6, polyamide 10.10, polyamide 10.12, polyamide 11, polyamide 6 (AP 6), polyamide 12 (AP 12), polyisopropyliden diphenylene terephthalate / isoterephthalate copolymer, polyphenylene ether, polyurethane, polyoxymethylene (POM), styrene acrylonitrile, polylactic acid (PLA), polycarbonate (PC), polymethyl methacrylate (PMMA), polyphenylsulfone (PPSU), polysulfone (PSU), polyether ketone (PEEK), polyoxymethylene, polyethylene (PE), polypropylene (PP), polyvinylchloride, polyethylene terephthalate (PET), polyethylene terephthalate with glycol (PETG), polystyrol, polyurethane, acrylnitrile-butadien-styrol, polybutylene terephthalate, styrol acrylonitrile, polyethylene furonate, cellulose ester, polyhydroxylbutanoic acid, polycaprolactone, polybutyrate adipate terephthalate, polybutylene succinate, polyphenylsulfone (PS), polyvinyl acetate, polyvinylidene chloride, acrylonitrile butadiene styrene (ABS), polyether etherketone, epoxy resins, thermoplastic elastomers (TPE-E), thermoplastic copolyamide (TPE-A), thermoplastic polyesterelastomer / thermoplastic copolyester (TPE-E), thermoplastic elastomer on olefinbasis (TPE-O), styrol-blockcopolymers (TPE-S), thermoplastic elastomers on urethanebasis (TPE-U), thermoplastic, cross-linked elastomers on olefinbasis (TPE-V), polybutylene terephthalate (PBT), polytrimethylene terephthalate (PTT) or mixtures thereof.

Polyamide 6 and polyamide 12 are for example used in selective laser sintering (SLS). Polylactic acid (PLA), polyethylene terephthalate with glycol (PETG), styrol-blockcopolymers (TPE-S) and acrylonitrile butadiene styrene (ABS), poly carbonate (PC) and polymethyl methacrylate (PMMA) are for example used in 3-dimensional inkjet printing (3DP). Polymethyl methacrylate (PMMA), e.g. sold under the trade name XB 5081 is for example also used in stereolithography (SLA).

Under the term *"dyeing step"* within the context of the present application it is to be understood that at least one surface of the plastic object is contacted with a dye, in particular a sulfur dye such that the color of the at least one surface of the plastic object after the dyeing step differs from the color of said surface of the plastic object prior to the dyeing step.

It is therefore a preferred aspect of the invention to the use at least one sulfur dye for dyeing at least one surface of a plastic. The advantages of using sulfur dyes are already discussed above and below.

In a preferred embodiment of the method according to the invention, at least one surface of the plastic object is contacted with no other dye than a sulfur dye.

Contacting of the at least one surface of the plastic object with the at least one dye can be conducted with any suitable application means or application methods. For example, the at least one sulfur dye can be sprayed onto the at least one surface of the plastic object by means of a spraying nozzle, or the at least one sulfur dye can be applied directly or via an inkjet process.. Further, the at least one surface of the plastic object can be contacted with the at least one sulfur dye by dipping the at least one surface of the plastic object into a dyeing solution.

In one embodiment, the at least one sulfur dye is applied directly, e.g. sprayed onto the at least one surface of the plastic objects which is to be dyed. The plastic object, respectively the at least one surface which is to be dyed of the plastic object can optionally be treated prior to the at least one dyeing step, e.g. physically (e.g. to modify the surface properties) and/or mechanically and/or chemically (e.g. to facilitate dye absorption and/or fixation). After the at least one dyeing step, wherein the at least one sulfur dye is sprayed onto the at least one surface, plastic object, in particular the at least one surface can be further treated. E.g. a finishing agent can be applied. Suitable finishing agents may be selected from cationic compounds, resins, UV protection agents, or other chemicals which provide desired properties to the plastic object, respectively the at least one dyed surface of the plastic object, like resistance to humidity, or light.

Under the term *"dyeing solution"* within the context of the present application an aqueous solution of the at least one sulfur dye is to be understood. This means that the at least one sulfur dye is at least partly, preferably completely dissolved in water and thus, the dyeing solution is formed. In order to obtain a dyeing solution in which the sulfur dye is at least partly, preferably completely present in dissolved form, the sulfur dye must be present at least partly, preferably completely in its reduced form and is thus also called leuco sulfur dye. The concentration of the leuco sulfur dye present in the dyeing solution can vary from at least 0.1 wt%, or from at least 0.5wt%, or from at least 1wt%, or from at least 2wt%, or from at least 3 wt%, or from at least 5wt%, or from at least 7wt%, or from at least 10wt%, or from at least 13wt%, or from at least 15wt%, or from at least 17wt%, and up to at most 40wt%, or up to at most 37wt%, or up to at most 35wt%, or up to at most 33wt%, or up to at most 30wt%, or up to at most 27wt%, or up to at most 25wt%, or up to at most 22wt%, or up to at most 20wt%, wherein the wt% are based on the total weight of the dyeing solution. In an alternative embodiment, the leuco sulfur dye is present in the dyeing solution in an amount of 0.1wt% to 40wt%, or 1wt% to 30wt%, or 2wt% to 20wt%. In a preferred embodiment, the dyeing solution is designed as a dyeing bath.

In a preferred embodiment, the dyeing solution only contains water, at least one dissolved sulfur dye and optionally at least one further agent selected from reducing agents, and/or UV protection agents, and/or alkaline or acidic compounds, and/or sequestering agents.

In case the dyeing solution is designed as dyeing bath, the liquor bath ratio, i.e. the ratio between the amount of the dyeing bath and the amount of plastic objects to be dyed is selected to be a least 1:2, or at least 1:5, or at least 1:10 and at most 1:15, or at most 1:20. Preferably, the liquor bath ratio is at least 1:2 and at most 1:20, or at least 1:5 and at most 1:15, or at least 1:5 and at most 1:10.

Reducing agents are used in order to reduce the at least one sulfur dye to the corresponding leuco form. The leuco form of the used sulfur dye is water soluble, i.e. in the dyeing solution the leuco form of the sulfur dye is present. Further, the reducing agent is used in order to maintain the leuco form of the sulfur dye during the dyeing step. In principle, all reducing agents, like sulfides and polysulfides known from dyeing textiles with sulfur dyes can be used. It is, however, preferred to use as reducing agents sugars, like dextrose, glucose, fructose, hydroxyacetone, sodium thioglycolate, sodium borohydride, thiourea dioxide or aldehyde sulfoxylate, sodium hydrosulfite, or combinations thereof can be used, because these types of reducing agents are safe and environmental friendly and the dyeing solution can be readily disposed and do not need any special treatment in order to remove the reducing agent. The dyeing solution containing the listed reducing agents can be easily recovered and reused and thus, no effluent is generated. In case, the dyeing solution has to be disposed, the dyeing solution can be easily treated by simple physic-chemical methods, like e.g. a pH neutralization making the sulfur dye water insoluble, or a precipitation / flocculation using iron or alumina based additives. Preferred reducing agents are sugars, like dextrose, glucose, fructose and sodium thioglycolate.

The amount of reducing agent used in the dyeing solution, respectively if it is necessary at all to add at least one reducing agent to the dyeing solution depends on several factors like duration of the dyeing step, equipment used, or dye concentration in the dyeing solution. Conventionally used amounts of the at least one reducing agent used in a dyeing solution, respectively in a dyeing bath are 0 g/l up to at most 20 g/l. One possibility to ensure that always the correct amount of reducing agent is present in the dyeing bath to ensure the reduction of the at least one sulfur dye during the dyeing step is to constantly measure the potential of the dyeing solution, e.g. the dyeing bath. The dyeing solution should have a electrochemical standard potential of - 500mV or less, preferably -550 mV or less preferably - 600mV or less, preferably -700 mV or less and more than -800mV. In a preferred embodiment the electrochemical standard potential is between -600mV and -700mV. In an alternative embodiment the electrochemical standard potential is between -500mV and -600mV. The electrochemical standard potential of the dyeing solution is measured according to known methods. A low electrochemical standard potential assures solubility and stability of the sulfur dye contained in the dyeing solution.

UV protection agents are used in order to prevent fading of the color of the dyed surface of the plastic object. UV protection agents usually convert UV light into warmth, or UV protection agent can also be designed as scavenger. Commonly known UV protection agents are benzophenone derivatives, benzotriazole derivatives, bisazomethin copper complex derivatives, adipic acid derivatives, or triazine derivatives, or HALS (= Hindered amine light stabilizers). In particular benzophenone derivatives have the further advantage to boost brilliance of the color when applied together with an optical brightening agent. UV protection agents are normally used in an amount of at least 0.1 wt%, or at least 0.5 wt%, or at least 1 wt%, or at least 1.5 wt%, or at least 2 wt%, or at least 2.5 wt%, and at most 3 wt%, or at most 3.5wt%, or at most 4 wt% based on the total weight of the dyeing solution. Preferably UV protection agents are used in an amount of at least 0.1 wt% and at most 4 wt%, or at least 2 wt% and at most 4 wt%.

Alkaline compounds and acidic compounds are used in order to adjust the pH of the dyeing solution containing the at least one sulfur dye. By using alkaline and acidic compounds it can be ensured that the pH of the dyeing solution is in such a pH range of at least 8, or at least 8.5 or at least 9 and at most 14, or at most 13 or at most 12 or at most 11, or at most 10.5, or between at least 8 and at most 14, or between at least 8 and at most 13, or at least 8.5 and at most 12, or at least 8.5 and at most 11. In one embodiment the pH value range of the aqueous sulfur dye composition is from 10.5 to 12. In a preferred embodiment the pH value is in the range of 9 to 10.5. Within this pH range the used sulfur dye is readily soluble in water. Examples for alkaline compounds which can be used are sodium hydroxide, potassium hydroxide, sodium carbonate, potassium carbonate, silicate or organic alkaline compounds like monoethanolamine. Examples for acidic compounds which can be used are preferably acid which are able to form buffering systems like acetic acid, sodium metabisulfite, phosphoric acid, sodium hydrogen carbonate, citric acid, formic acid, lactic acid, or glucuronic acid.

The dyeing solution may comprise one or more solubilizing aid for enhancing the solubility of the leuco sulfur dye in the dyeing solution. Such solubilizing aids can be selected from glycols and glycol ether derivatives like glycol dialkyl ethers, polyoxyalkylenes like polyethyleneglycol or polypropyleneglycol, and alcohols. The solubilizing aids can be present in concentrations from at least 0.1 %wt, or at least 0.5%wt., or at least 1%wt., or at least 2%wt., or at least 5%wt., or at least 10wt% and at most 30%wt., 25%wt., 20%wt., 15%wt., preferably in the range from 0.1 %wt to 30%wt., more preferably from 3% to 10%wt. The wt% are based on the total weight of the dyeing solution.

The dyeing solution may also further comprise one or more dispersing agents like naphthalene or lignosulphonates, and /or one or more hydrotropic agents like xylene sulphonate or toluene sulfonate. The amount of dispersing agent(s) present in the dyeing solution can vary from at least 0.1 %wt, or at least 0.5%wt., or at least 1%wt., or at least 2%wt., or at least 5%wt., or at least 10wt% and at most 30%wt., 25%wt., 20%wt., 15%wt., preferably in the range from 0.1 %wt to 30%wt., more preferably from 3% to 10%wt. The wt% are based on the total weight of the dyeing solution. The amount of hydrotropic agent(s) present in the dyeing solution may be from at least 0.1 %wt, or at least 0.5%wt., or at least 1%wt., or at least 2%wt., or at least 5%wt., or at least 10wt% and at most 30%wt., 25%wt., 20%wt., 15%wt., preferably in the range from 0.1 %wt to 30%wt., more preferably from 3% to 10%wt. The wt% are based on the total weight of the dyeing solution.

The dyeing solution can contain further sodium sulfide. The range of sodium sulfide in the dyeing solution is below 20%wt., preferable below 10%wt., more preferable below 5%wt, or 0%wt. It is most desirable to have a sodium sulfide concentration of below 0.5%wt. The wt% are based on the total weight of the dyeing solution.

The dyeing step is performed at a temperature of at least 20°C, or at least 30°C, or at least 40°C, or at least 50°C, or at least 60°C, or at least 70°C, and at most 80°C, or at most 90°C, or at most 100°C, or at most 110°C, or at most 120°C, or at most 130°C. Preferably, the dyeing step is performed at a temperature of at least 20°C and at most 130°C, or at least 40°C and at most 120°C, or at least 50°C and at most 110°C, or at least 60°C and at most 100°C. In case a dyeing bath is used during the dyeing step, the temperature of the dyeing bath is selected to be at least 20°C, or at least 30°C, or at least 40°C, or at least 50°C, or at least 60°C, or at least 70°C, and at most 80°C, or at most 90°C, or at most 100°C, or at most 110°C, or at most 120°C, or at most 130°C, or at most 140°C, or at most 150°C. Preferably, the temperature of the dyeing bath is at least 20°C and at most 150°C, or at least 40°C and at most 120°C, or at least 50°C and at most 110°C, or at least 60°C and at most 100°C. Speed of the dyeing process increases with increasing temperature as well as the diffusion of the at least one sulfur dye into the at least one surface of the plastic object. Consequently, it is preferred to conduct the dyeing step at higher temperatures. Nevertheless, dyeing of the at least one surface of the plastic object also occurs at room temperature. In case a dyeing bath is used, the dyeing step has to be conducted in an autoclave if the temperature of the dyeing bath exceeds 100°C, since 100°C is the boiling point of water.

Another possibility to speed up the dyeing process is the use of ultrasound. If e.g. a dyeing bath is used, the dyeing bath can be subjected to an ultrasonic treatment. The dyeing process can be even more accelerated if the ultrasonic treatment is combined with elevated temperature.

The dyeing step lasts at least 1 second, or at least 10 seconds, or at least 30 seconds, or at least 1 minute, or at least 5 minutes, or at least 10 minutes, or at least 20 minutes, or at least 30 minutes, or at least 40 minutes, or at least 50 minutes, and at most 60 minutes, or at most 70 minutes, or at most 80 minutes, or at most 90 minutes, or at most 100 minutes, or at most 110 minutes, or at most 120 minutes. The duration of the dyeing step is this time range during which the at least one surface of the plastic object is contacted with the at least one sulfur dye. If for example a pale color tone of the at least one surface of the plastic object should be achieved, it is enough to contact said surface with the sulfur dye for only some minutes. If, however, a more intense color tone of the at least one surface of the plastic object should be achieved the dyeing step can last up to two hours.

The dyeing step can be conducted as continuous dyeing or as exhaust dyeing.

Under the term *"continuous dyeing"* within the context of the present application it is to be understood that the dyeing step is performed continuously, i.e. that there is a constant flow of plastic objects being charged to and discharged from the place where the dyeing step takes place, e.g. the dyeing bath. Thus, the plastic objects to be dyed are moved through the dyeing solution, respectively the dyeing bath. The continuous flow of plastic objects can be realized by any suitable transportation means like e.g. a belt or heels arranged on a line. The concentration of the dye in the dyeing solution, e.g. in the dyeing bath, is at least 0.1 g/l, or at least 1 g/l, or at least 10 g/l, or at least 20 g/l, or at least 40 g/l, or at least 60 g/l or at least 80 g/l, or at least 100 g/l, or at least 120 g/l, or at least 140 g/l, or at least 160 g/l, or at least 180 g/l, or at least 200 g/l, and at most 220 g/l, or at most 240 g/l, or at most 260 g/l, or at most 260 g/l, or at most 280 g/l, or at most 300 g/l, or at most 320 g/l, or at most 340 g/l, or at most 360 g/l, or at most 380 g/l, or at most 400 g/l.

Under the term *"exhaust dyeing"* within the context of the present application it is to be understood that the dyeing step is performed batch wise, i.e. a certain number of plastic objects are dyed all at once in one dyeing solution or a dyeing bath containing the dyeing solution. If the dyeing solution is designed as dyeing bath, the dyeing bath is moved around the plastic objects which are to be dyed. After completion of the dyeing step the dyed plastic objects are all discharged from the place where the dyeing step has taken place, e.g. from the dyeing bath containing the dyeing solution and another number of plastic objects is subjected to the dyeing step. The dyeing concentration, i.e. the weight amount of sulfur dye contained in the dyeing bath is based on the weight amount of the plastic objects which will be dyed and is selected to be at least 0.01%, or at least 0.1%, or at least 5%, or at least 10%, or at least 15%, or at least 20%, or at least 30%, or at least 40%, and at most 50%, or at most 60%, or at most 70%, or at most 80%, or at most 90%, or at most 100%. Preferably the dyeing concentration is at least 0.1 % to at most 100%, or at least 5% to at most 90%, or at least 5% to at most 40%, or at least 10% to at most 80%, or at least 20% to at most 70%.

Under the term *"sulfur dye"* within the context of the present application a dye is to be understood which is obtained by heating organic compounds with sulfur or alkali polysulfide, like for example sodium sulphide (Na₂S) or sodium polysulfide (Na₂Sₓ), wherein the organic compounds can be derived from renewable vegetal waste or from petroleum-derived compounds. The reaction of the organic compound with sulfur or alkali polysulfide is known as sulfurization or thionation. The resulting sulfur dyes cannot be assigned a specific structural formula. In fact, sulfur dyes can be considered as dyes having a high molecular weight. Under the term *"sulfur dye"* as used within the context of the present application also a polymeric sulfur dye is to be understood. In the prior art (Colour Index, 3rd edition, Volume 4, published 1971 by the Society of Dyers and Colourists, page 4475 and following which is herewith incorporated by reference) it is described that the dyes obtained by a sulfurization reaction can be controlled by the organic compound selected for sulfurization, conditions of sulfurization and the conditions of the isolation or work-up.

Sulfur dyes derived from petroleum-derived compounds give in particular brown, blue and black colors. Commonly known sulfur dyes derived from petroleum-derived compounds are divided into groups which are determined by the petroleum-derived organic compound predominating in the manufacturing process: 1. Mononuclear benzenoid amine and nitro compounds (color index number (in the following referred to C.I.) 53005 - 53135), 2. Binuclear benzenoid amino and nitro compounds (C.I. 53140 - 53160), 3. Substituted phenols (other than indophenols) (C.I. 53165 - 53265), 4. Substituted naphthalenes (other than indophenols) (C.I. 53270 - 53300), 5. Polycyclic compounds (C.I. 53320 - 53335), 6. Indophenols containing (a) two benzene nuclei (C.I. 53400 - 53442), (b) three benzene nuclei (C.I. 53450 - 53480), (c) a naphthalene nucleus (C.I. 53520 - 53590), (d) a carbazole nucleus (C.I. 53630 - 53640), 7. Acridine, azine, oxazone and thiazone compounds (C.I. 53680 - 53830). The mentioned sulfur dyes can for example be obtained by sulfurization methods known as sulfur bake, sodium polysulfide bake, sodium polysulfide melt in aqueous and solvent media.

The details of the mentioned manufacturing methods are known to the skilled person. In general, a sulfur bake is the reaction of the raw material (e.g. an amine) is mixed with sulfur or sulfur and sodium sulfide. The mixture is then heated at temperatures of above 200°C. At one point in time the reaction mixture becomes solid. The thus obtained reaction mixture is then dissolved in water and caustic soda and steam boiled for several hours until complete solubilization. The manufacturing method for sulfur dyes in aqueous media is generally conducted as follows: A mixture of the educt, e.g. dinitrophenolate or indophenol is mixed with water and optionally further agents like glycols, glycolethers, and/or dispersing agents. The thus obtained mixture is combined with sulfur and sodium sulfide. Thus, sodium polysulfide is obtained which then reacts with the educt. Usually, this reaction is done under reflux at temperatures of between 105 to 160°C under stirring. Finally, the thus obtained liquid is diluted with more water and, optionally combined with caustic soda and/or reducing agents.

Examples of sulfur dyes originating from petroleum-derived compounds which can be used in the method according to the invention are listed in following table 1.

**Table 1**

| **CAS Registry Number** | **Chemical name** | **Color shade** |
|---|---|---|
| 66241-11-0 | phenol, 2,4-dinitro-, sulfurized, leuco derivatives | Black |
| 70892-34-1 | Formaldehyde, reaction products with m-phenylenediamine, sodium sulfide (Na₂S) and sulfur | Yellow-Brown |
| 85736-99-8 | phenol, 4-(phenylamino)-, sulfurized, leuco derivatives | Red-Brown |
| 70892-38-5 | Phenol, 4-amino-, reaction products with aniline, 4-methyl-1,3-benzenediamine, p-phenylenediamine, sodium sulfide (Na₂S) and sulfur | Olive-Green |
| 90268-98-7 | Carbonic acid disodium salt, reaction products with aniline, 4-nitrobenzenamine, p-phenylenediamine, sodium sulfide, sulfur and p-toluidine | Yellow |
| 100208-66-0 | 1,3-Benzenediamine, 4-methyl-, reaction products with 4-nitrobenzenamine, p-phenylenediamine and sodium sulfide (Na₂(Sₓ)) | Olive-Yellow |
| 61902-31-6 | Leuco polysulfided 4-[(2,4-dinitrophenyl)amino]phenol | Dark Blue |
| 85940-09-6 | Acetamide, N-(2,4-dinitrophenyl)-, reaction products with p-phenylenediamine, sodium sulfide (Na₂(S_{X})) and sulfur, leuco derivatives | Olive |
| 12262-25-8 | phenol, 4-[4-(dimethylamino)phenyl] reaction products with sodium sulfide (Na₂Sₓ), leuco derivates | Blue and Black |
| 85940-25-6 | Phenol, 4-(9H-carbazol-3-ylamino)-, reaction products with sodium sulfide (Na₂(S_{X})) and sulfur, leuco derivatives | Blue and Navy |
| 12262-26-9 | 2,5-Cyclohexadien-1-one, 4-[[4-(phenylamino)phenyl]imino]-, reaction products with sodium sulfide (Na₂(Sₓ)), leuco derivatives | Greenish Blue |
| 1040873-93-5 | Phenol, 4-amino-, reaction products with 2-ethyl-6-methylbenzenamine, sodium hydroxide, sodium sulfide (Na₂S) and sulfur | Reddish Blue |
| 1326-83-6 | phenol, 2,4-dinitro-, sulfurized, thiosulfonated | Black |
| 85940-08-5 | acetamide, N-(2,4-dinitrophenyl)-, reaction products with 1-methyl-2,4-dinitrobenzene and sodium sulfide (Na₂(S_{X})), leuco derivatives | Orange |
| 71838-68-1 | formamide, N,N'-1,4-phenylenebis-, reaction products with 4-methyl-1,3-benzenediamine and sulfur, leuco derivatives | Golden Yellow |
| 68585-53-5 | Thiocyanic acid, (1,3,8,10-tetrahydro-1,3,8,10-tetraoxoanthra[2,1,9-def:6,5,10-d'e'f']diisoquinoline-2,9-diyl)di-3,1-phenylene ester, reaction products with sodium sulfide (Na₂(Sₓ)) | Red |
| 100208-97-7 | 2-Naphthalenesulfonic acid, 5(or 8)-amino-, reaction products with 4-aminophenol and sodium sulfide (Na₂(S_{X})) | Blue |
| 12262-32-7 | 1-naphthalenesulfonic acid, 5-[(4-hydroxyphenyl)amino]-8-(phenylamino)-, reaction products with sodium sulfide (Na₂(Sₓ)), leuco derivatives | Green |
| 90480-94-7 | Phenol, 4-amino-, reaction products with 4-(2-naphthalenylamino)phenol and sodium sulfide (Na₂(Sₓ)) | Black |
| 1040874-53-0 | Disulfurous acid, sodium salt (1:2), reaction products with 4-aminophenol, 2-ethyl-6-methylbenzenamine, sodium sulfide (Na₂S) and sulfur | Blue |

As mentioned before, sulfur dyes can also be obtained by the sulfurization of renewable, vegetal waste. These sulfur dyes are a rather new development. The methods on how to obtain these sulfur dyes are described in WO 2012/163498 and WO 2013/007358, which are both incorporated herein by reference.

Renewable, vegetal waste is treated with sulfide, or polysulfide (e.g. Na₂S or Na₂Sₓ) either under alkaline or acidic conditions at higher temperatures. The thus obtained mixture is then dissolved in aqueous medium and eventually remaining solid particles are removed. In principle, the renewable, agricultural waste can be taken from any kind of plant products, for example from forest or agricultural crop activities or even from marine sources. In particular renewable, vegetal waste suitable to be used as educt for the sulfur dyes can be selected from plant products containing from about 3 to 50 % by weight, based on dry mass, of lignin, further components can be polysaccharides, e.g. cellulose. Examples are biomass sources obtained from wastes of forestry activities, e.g. tree barks, wood chips, wood pellets, saw dust, cotton residues, or from agricultural crop activities, such as shells from dry fruits, preferably nutshells, e.g. hazelnut shells, walnut shells, coconut shells, cashew nut shells, pistachio shells, pine fruit shells, and almond shells, further cereals, fruit pits, such as date pits, cherry pits, olive pits. Also plant products, mostly related to fruits, containing phenols and polyphenols in an amount from about 5 to 50 % by weight, based on dry mass can be used. Such plant products can further contain components like terpenes, phenolic acids, stilbenes, lignans, flavonoids, tannins, lipids, proteins. Examples are olive pulp, olive orujillo, pips flour, rice residues, grape marc, sun flower pulp, soybean pulp, canola bagasse, herbs ground, corncob and coffee ground. Suitable plant products from marine sources are algae, e.g. brown, red and green algae. Algae usually contain as main components alginic acid, xylans, mannitol, proteins, tannins depending on the algal species.

Examples of sulfur dyes originating from renewable, vegetal waste which can be used in the method according to the invention are further listed in following table 2.

**Table 2**

| **CAS Registry Nb.** | **CA Index name** |
|---|---|
| 1456794-36-7 | Oils, rosemary, residues, reaction products with sodium hydroxide, sodium sulfide (Na₂S) and sulfur |
| 1458581-69-5 | Almond, nutshell, reaction product with Corylus avellana hazel nutshell, sodium hydroxide, sodium sulfide (NaS₂) and sulfur |
| 1680199-81-8 | Oils, serenoa repens, residues, reaction products with sodium hydroxide, sodium sulfide (Na₂S) and sulfur |
| 1680199-78-3 | Oils, beet, residues, reaction products with sodium hydroxide, sodium sulfide (Na₂S) and sulfur |
| 1680199-82-9 | Oils, orange, sour, residues, reaction products with sodium hydroxide, sodium sulfide (Na₂S) and sulfur |

The sulfur dye used in the method according to the invention is treated with a reducing agent in order to obtain the water soluble leuco form of the sulfur dye which is then contacted with the at least one surface of the plastic object. Consequently, the term *"sulfur dye"* as used within the context of the present application also encompasses the water soluble form thereof, i.e. the leuco sulfur dye. The treatment of the sulfur dye with the reducing agent can be done prior to the dyeing step. For example, there are pre-reduced sulfur dyes available wherein the sulfur dyes are sold in their respective leuco form and can be readily applied in the method according to the invention.. The treatment of the sulfur dye can also be done during the dyeing step, i.e. the water-insoluble sulfur dye, e.g. used in form of a powder or liquid wherein the sulfur dye is present in its oxidized form is combined with water and the reducing agent. Thus, the water-insoluble sulfur dye is reduced into its water-soluble leuco form due to the reaction with the reducing agent present in the water. Another possibility is to use solubilized sulfur dyes. Solubilized sulfur dyes are thiosulfonic acid derivatives of sulfur dyes. Solubilized sulfur dyes are water soluble and can be obtained by treating the water-insoluble sulfur dye with sulfite or bisulfite agents.

The advantage of using sulfur dyes instead of other dyes like disperse dyes is that sulfur dyes do not contain metal (ions) or halogens, which are often regarded as harmful compounds. The sulfur dyes can be regarded as non-toxic dyes. Further, since sulfur dyes can be considered as polymeric dyes having a high molecular weight, and are therefore regarded as safe and toxicological harmless. Using sulfur dyes has the further advantage that the aqueous solution of the sulfur dye, e.g. the dyeing bath can be recovered and reused, respectively stored for further use for subsequently following dyeing steps, due to the high stability of the sulfur dyes in their leuco form present in the dyeing solution. Further, the aqueous solution of the sulfur dye, e.g. dyeing bath can be disposed easily: by adding oxidizing- or neutralization-, or neutralization and precipitating agents to the aqueous solution of the sulfur dye, the sulfur dye is converted into a water insoluble pigment which then can be removed from the remaining water e.g. by filtration. The water can be disposed and the pigment can be re-used again in another solution by adding a reducing agent which converts the pigment back into the water soluble leuco form. The amount of sulfur dye remaining in the dyeing solution can be determined, and, if necessary, further dye can be added until the desired dye concentration is achieved. Consequently, no sulfur dye has to be disposed after the dyeing solution was used. Sulfur dyes are commonly employed in dyeing cellulosic textiles. However, sulfur dyes have yet not been used in dyeing materials other than cellulosic textiles. With the present application it was successfully achieved for the first time to dye plastic objects with sulfur dyes.

The method according to the invention can comprise at least one further step wherein at least one surface of the plastic object is further treated chemically, and/or physically, and/or mechanically. The at least one surface which is further treated chemically, and/or physically, and/or mechanically can be either the surface which will be dyed in the dyeing step and/or can be another surface which will not be dyed in the dyeing step. It is further possible that different surfaces are treated differently. E.g. it is possible that one surface is subjected to a coating step, while all other surfaces are subjected to a roughening step. It is also possible that one surface is subjected by a coating step using a varnish, while the other surfaces are subjected to a coating step using physical vapour deposition.

In one embodiment, all surfaces of the plastic object are further treated chemically, and/or physically, and/or mechanically.

In particular, this one further step can be selected from deburring of at least one surface of the plastic object, and/or roughening of at least one surface of the plastic object, and/or washing of at least one surface of the plastic object, and/or coating of at least one surface of the plastic object, and/or sealing of at least one surface of the plastic object, and/or impregnating of at least one surface of the plastic object, and/or imprinting of at least one surface of the plastic object, and/or drying of at least one surface of the plastic object, and/or oxidizing of at least one surface of the plastic object.

The at least one further step is conducted either prior to the at least one dyeing step, or simultaneously to the at least one dyeing, or after the at least one dyeing step. For example, the at least one surface of the plastic object can first be roughened, then subjected to the dyeing step and afterwards subjected to an oxidization step.

Plastic objects which should be dyed may have a rough surface or undesired rough edges due to the manufacturing method by which the plastic objects were made. Therefore it might be necessary to deburr, respectively smooth the rough surface or the rough edges. This has the advantage that a homogeneous surface of the plastic object can be achieved which then results in a homogeneous colorization of the at least one surface of the plastic object after the dyeing step. Thus, deburring is preferably done prior to the at least one dyeing step. Deburring can also be done after the dyeing step in order to achieve some attractive effects by removing some or all the color from parts of the dyed surface. All commonly known means are suitable for the deburring. In particular mechanical means are suitable like e.g. abrasive paper, slide grinding, sandblasting, or filling of grooves. But also chemical means are suitable like hot or cold steam treatment of the surface with a solvent like formic acid, ethyl acetate or acetone, or 3D-CMF (3D chemical melting finishing). It is also possible to combine different deburring means, e.g. first the plastic object is subjected to slide grinding, then to sandblasting and finally to a treatment with formic acid steam. Which kind of deburring is chosen depends on the material of the plastic object and what effect should be achieved (e.g. smoothening of the surface or achieving visual effects by removing part of the color).

It may be also desirable to at least partly roughen the at least one surface of the plastic object. Roughening can be done by any known suitable means e.g. by a corona treatment, or the treatment with cold plasma or laser. Roughening can also be done by sanding, respectively wet- sanding or manually with sand paper, or by any other suitable mechanical, electronical sanding applications. If the roughening of the at least one surface is done prior to the dyeing step, this has the advantage that dyeing is facilitated. Further, it was found that the color can be intensified. Roughening can also be done after the dyeing step to achieve attractive effects.

It may be also desirable to at least partly harden the at least one surface of the plastic object. Hardening can be done applying epoxy resin or adhesives to the surface.

Further, it may also be desirable to at least partly infiltrate the at least one surface of the plastic object. In general, surfaces of 3D printed plastic objects are rather sensitive, and sanding of the surface can occur. Therefore, the surfaces can be infiltrated which means that the applied infiltration agent will be soaked into the porous surface of the 3D-printed plastic objects and will thus stabilize the surface. Such a treated surface is in addition also smoother, more resistant to pressure and more waterproof. Infiltration agents are usually applied by mechanical means like a brush. The infiltration agent should only be applied in such an amount that it is essentially completely absorbed by the surface.

It may be also desirable to subject the plastic object, respectively the at least one surface which is / will be dyed to an ultrasonic treatment. The ultrasonic treatment can e.g. be done prior to the at least one dyeing step in order to e.g. clean the plastic object, respectively the at least one surface which is to be dyed. The ultrasonic treatment can also be done during the dyeing step in order to accelerate the dyeing of the at least one surface of the plastic object. The ultrasonic treatment can be done by e.g. putting the plastic object into an ultrasonic bath filled e.g. with a cleaning liquid, e.g. water or a dyeing solution.

Further, the at least one surface of the plastic object can be treated with one or more optical brightening agents. The application of optical brightening agents can have a positive effect on the final color of the at least one surface of the plastic object.

Also a washing step can be employed in the method according to the invention. If maybe necessary to wash the plastic object, respectively the at least one surface of the plastic object prior to the dyeing step in order to e.g. remove dirt or water from the plastic object such that a homogenous colorization of plastic object, respectively the at least one surface of the plastic object can be achieved. It is also possible that a washing step is conducted after the dyeing step e.g. in order to remove excess dye for the plastic object, respectively the at least one surface of the plastic object. In the washing step tap water or deionized water can be used. Further, also other liquids like alcohols can be used. In addition, surface or tension active agents can be employed in the washing step e.g. such that dyeing of the at least one surface of the plastic object is facilitated, respectively fixation of the dye on the surface of the plastic object is strengthened or such that non-fixed dye is removed.

Further, it is possible to employ a coating step into the method according to the invention. It is possible to employ a coating step prior to the dyeing step to cover at least parts of the surface of the plastic objects in order to protect these parts from being dyed. This has the advantage that attractive patterns can be obtained. The non-dyed surfaces can then also be subjected to another dyeing step after the protective coating is removed. Further, it is also possible to conduct a coating step after the dyeing step. The coating step can be conducted by any suitable means known for coating, e.g. by using varnishes which are applied e.g. by spraying means, or by conducting a physical or chemical vapor deposition treatment, or flock-coating, or making a sol-gel coating, or a coating by galvanization, or a dip coating using latex. Coating can also be conducted by using foils, like e.g. metal foil, or by using powder. It is possible to combine one or more coating methods in one coating step. For example, one or more layers of the same or different varnishes can be applied to the dyed surface e.g. in order to give the surface of the plastic object a glossy look, or to provide some scratch resistance to the surface. For coatings commonly known, varnishes can be used. Further, the varnishes can also contain pigments, or metal sparks or other additives. It is also possible to e.g. conduct first a physical vapour deposition and then conduct a galvanization in order to obtain metalized surfaces.

It is also possible to employ a sealing step into the method according to the invention. A sealing step is preferably conducted after the dyeing step in order to seal at least parts of the surface of the plastic object. Thus, at least parts of the surface of the plastic object can be equipped with e.g. water- and/or oil- and/or chemical repellency or with a lotus effect. A sealing step can also be conducted prior to the at least one dyeing step in order to protect certain parts from being dyed.

It is also possible to employ an impregnating step into the method according to the invention. An impregnating step can be conducted prior, during or after the at least one dyeing step. The impregnating step can be conducted by any commonly known means. E.g. the impregnating agent can be applied to the plastic object by spraying or by dipping. Suitable impregnating agents are for example UV protection agents as already defined above, or biocides, e.g. anti-bacterial agents like formulated thiazolinone derivatives or permethrine, or anti-static agents. Further suitable impregnating agents are for example flame retardants like organic phosphinates, organic phosphates, or inorganic phosphates. The organic, respectively inorganic phosphates can be used alone or in combination with nitrogen- or sulfur containing synergists. Flame retardants can be applied by dipping or spraying applications or by using water-based or solvent based binders.

It is also possible to employ an imprinting step into the method according to the invention. An imprinting step can be conducted either prior to or after the dyeing step. An imprinting step can be conducted by any commonly known imprinting means, like laser, punching means, or molding cutters. It is also possible to use instead of mechanical imprinting means chemical imprinting means, wherein the imprinting is done e.g. by way of etching. An imprinting step has the advantage to apply decorative patterns to the surface of the plastic object, or to apply further shapes to the surface of the plastic object which are necessary for the further use of the plastic object, e.g. apply holes to the plastic object.

It is also possible to employ a drying step into the method according to the invention. A drying step can be conducted either prior to or after the dyeing step. The drying step can be conducted by any suitable means, e.g. by applying hot (e.g. temperature of up to 200°C) or cold air to the surface of the plastic object. It is also possible to subject the plastic object to a treatment using IR and/or UV radiation. In particular UV radiation is suitable for drying certain types of agents which were applied to the surface in another step, e.g. in a coating step. Thus, the drying step can also be regarded as curing step.

It is also possible to employ an oxidizing step into the method according to the invention. In a preferred embodiment, the oxidizing step is conducted after the dyeing step and is particularly employed to the at least one surface which was dyed in the dyeing step. This has the advantage that the applied sulfur dye, which is present in its leuco form after the dyeing step is oxidized and thus turned into the water-insoluble sulfur dye form having the final, desired color. For example, if a sulfur dye with the chemical name "phenol, 4-amino-, reaction products with 4-(2-naphtalenylamino)phenol and sodium sulfide (Na₂Sₓ)", registered under the CAS Registry number 90480-94-7 is used, the dyed surface of the plastic object has a greenish appearance after the dyeing step due to the presence of the leuco form of the sulfur dye. After the oxidizing step, the color changes to a deep black, since the leuco form of the sulfur dye is oxidized and thus, the water-insoluble sulfur dye having the deep black color is obtained. The oxidization step can be conducted by any suitable means, e.g. by spraying the oxidizing agent to the surface of the plastic object, or by dipping the surface into the oxidizing agent.. Oxidizing agents are used in an amount of at least 0.1 g/l, or at least 1g/l, or at least 5 g/l, or at least 10 gr/l, or at least 20 g/l, or at least 30 g/l, or at least 40 g/l, or at least 50 g/l, or at most 60g/l, or at most 70 g/l, or at most 80 g/l, or at most 90 g/l, or at most 100 g/l. Preferably, oxidizing agents are used in an amount of at least 0.1 g/l to at most 100 g/l, or at least 5 g/l to at most 50 g/l, or at least 10 g/l to at most 30 g/l. Oxidizing agents can be combined with oxidizing catalysts to increase the speed of the oxidizing step. Suitable oxidizing catalysts are e.g. acidic organic metal complexes. Suitable oxidizing agents are for example peroxides, ozone, perborates, persulfates, percarbonates, bromates, iodates, or hypochlorites. It is preferred to conduct the oxidizing step at elevated temperatures of at least 40°, or at least 50°C, or at least 60°, and at most 70°C, or at most 85°C. The oxidizing step can be conducted in alkaline pH, i.e. a pH above 7, or in acidic pH, i.e. a pH of between 1 to 7.

In a preferred embodiment of the method according to the invention, the at least one dyeing step is followed by at least one oxidizing step.

In another preferred embodiment of the method according to the invention, the at least one dyeing step is followed by at least one oxidizing step and at least one washing step.

In another preferred embodiment of the method according to the invention, the at least one dyeing step is followed by at least one oxidizing step, at least one washing step and at least one impregnating step, wherein e.g. UV protection agents and/or flame retardants are applied.

In a further preferred embodiment of the method according to the invention, the at least one dyeing step is followed by at least one oxidizing step, at least one washing step, at least one impregnating step, wherein UV protection agents and/or flame retardants are applied, and finally at least one sealing step, wherein water- and/or oil- and/or chemical repellant agents are applied.

In another preferred embodiment of the method according to the invention, the following steps are carried out: a) washing, b) smoothing, c) dyeing, d) oxidizing, e) washing, f) infiltrating and g) coating with varnish.

In one embodiment the at least one dyeing step is performed in a device being part of or directly connected to a device for conducting said 3D printing method. E.g. the 3D printing of the plastic object can be conducted in a 3D printing machine. This 3D printing machine can be further equipped with e.g. spraying nozzles for spraying the at least one sulfur dye.

### EXAMPLES

The method according to the invention is in the following described in more detail. However, the method according to the invention should not be limited to the following examples.

### Example 1

3 plastic objects made of PA12 having a total weight 5gr together are immersed in a dyeing bath containing a solution 50gr of deionized water, 2gr of a sulfur dye registered under the CAS Registry Number 90480-94-7 (see Table 1) and 1 gr of a 45% concentrated sodium thioglycolate solution as reducing agent.

The dyeing bath containing the plastic objects is heated up to a temperature of 100ºC and stirred for 1 hour. The dyed plastic objects are removed from the bath and washed using deionized water. The dyeing bath is collected. The dyed plastic objects have a yellowish-green color.

An oxidizing bath is prepared by combining 50gr of deionized water, 1gr of 30% hydrogen peroxide, and 0.3gr of 80% acetic acid and 1 gr of an oxidizing catalyst based on acidic organic metal complexes. The dyed plastic objects are immersed in the oxidizing bath. The oxidizing bath is heated up to a temperature of 50ºC and stirred for 30 minutes. The plastic objects are then washed using deionized water and dried at 70°C.

The thus obtained dyed plastic objects have a very dark black color.

### Example 2

4 plastic objects made of PA12 having a total weight of 8 gr together are immersed in a dyeing bath containing a solution 80gr of deionized water, 3gr of a sulfur dye registered under the CAS-Registry number 12262-25-8 (see Table 1) and 1.5 gr of a 45% concentrated sodium thioglycolate solution as reducing agent.

The dyeing bath containing the plastic objects is heated up to a temperature of 100ºC and stirred for 1 hour. The dyed plastic objects are removed from the bath and washed using deionized water. The dyeing bath is collected. The dyed plastic objects have a dark greenish color.

An oxidizing bath is prepared by combining 100gr of deionized water, 2gr of 30% hydrogen peroxide, and 0.5gr of 80% acetic acid and 2gr of an oxidizing catalyst based on acidic organic metal complexes. The dyed plastic objects are immersed in the oxidizing bath. The oxidizing bath is heated up to a temperature of 50ºC and stirred for 30 minutes. The plastic objects are then washed using deionized water and dried at 70°C.

The thus obtained dyed plastic objects have a very dark black color, which is compared to Example 1 less reddish and more bluish.

### Example 3

4 plastic objects made of PA12 having a total weight of 8 gr together are immersed in a dyeing bath containing a solution 80gr of deionized water, 1.5gr of a sulfur dye registered under the CAS-Registry number 12262-26-9 (see Table 1) and 1.5 gr of concentrated sodium thioglycolate solution as reducing agent.

The dyeing bath containing the plastic objects is heated up to a temperature of 80ºC and stirred for 10 minutes. The dyed plastic objects are removed from the bath and washed using deionized water. The dyeing bath is collected. The dyed plastic objects have a very pale yellowish color.

An oxidizing bath is prepared by combining 100gr of deionized water, 2gr of 30% hydrogen peroxide, and 0.5gr of 80% acetic acid and 2gr of an oxidizing catalyst based on acidic organic metal complexes. The dyed plastic objects are immersed in the oxidizing bath. The oxidizing bath is heated up to a temperature of 50ºC and stirred for 30 minutes. The plastic objects are then washed using deionized water and dried at 70°C.

The thus obtained dyed plastic objects have a medium brilliant blue color.

## Claims

1. Method for treating at least one surface of a plastic object, wherein the method comprises at least one dyeing step, wherein in the at least one dyeing step at least one sulfur dye is used.

2. Method according to claim 1, wherein the dyeing step is conducted by contacting the at least one surface of the plastic object with the at least one sulfur dye, preferably in a dyeing bath.

3. Method according to claim 1 or 2, wherein the dyeing step is performed at a temperature of at least 20°C, or at least 30°C, or at least 40°C, or at least 50°C, or at least 60°C, or at least 70°C, and at most 80°C, or at most 90°C, or at most 100°C, or at most 110°C, or at most 120°C, or at most 130°C, or at most 140°C, or at most 150°C.

4. Method according to at least one of the preceding claims, wherein the at least one sulfur dye is at least partly dissolved in water.

5. Method according to at least one of the preceding claims, wherein the dyeing step is conducted as continuous dyeing or as exhaust dyeing.

6. Method according to at least one of the preceding claims, wherein the dyeing step lasts at least 1 second, or at least 10 seconds, or at least 30 seconds, or at least 1 minute, or at least 5 minutes, or at least 10 minutes, or at least 20 minutes, or at least 30 minutes, or at least 40 minutes, or at least 50 minutes, and at most 60 minutes, or at most 70 minutes, or at most 80 minutes, or at most 90 minutes, or at most 100 minutes, or at most 110 minutes, or at most 120 minutes.

7. Method according to at least one of the preceding claims, wherein the method comprises at least one further step wherein at least one surface of the plastic object is further treated chemically, and/or physically, and/or mechanically.

8. Method according to claim 7, wherein this at least one further step is conducted either prior to the at least one dyeing step, or simultaneously to the at least one dyeing, or after the at least one dyeing step.

9. Method according to at least one of the preceding claims, wherein the at least one sulfur dye is a dye which is obtained by heating organic compounds with sulfur or alkali polysulfide, wherein the organic compounds can be derived from renewable vegetal waste or from aromatic compounds.

10. Method according to at least one of the preceding claims, wherein the at least one sulfur dye is treated with a reducing agent.

11. Method according to claim 10, wherein the reducing agent is selected from a sugar, hydroxyacetone, sodium thioglycolate, sodium borohydride, thiourea dioxide or aldehyde sulfoxylate, or combinations thereof.

12. Method according to at least one of the preceding claims, wherein the plastic object is made from polyimide, polyamideimide, polyphthalamide, polyetherimide, polymethacrylimide, liquid crystal polymer, polyethersulfone, polyphenylenesulfide, polymethylmethacrylimide, polyamide, polyamide 4.10, polyamide 6.10, polyamide 10.10, polyamide 6.6, polyamide 4.6, polyamide 10.10, polyamide 10.12, polyamide 11, polyamide 6 (AP 6), polyamide 12 (AP 12), polyisopropyliden diphenylene terephthalate / isoterephthalate copolymer, polyphenylene ether, polyurethane, polyoxymethylene (POM), styrene acrylonitrile, polylactic acid (PLA), polycarbonate (PC), polymethyl methacrylate (PMMA), polyphenylsulfone (PPSU), polysulfone (PSU), polyether ketone (PEEK), polyoxymethylene, polyethylene (PE), polypropylene (PP), polyvinylchloride, polyethylene terephthalate (PET), polyethylene terephthalate with glycol (PETG), polystyrol, polyurethane, acrylnitril-butadien-styrol, polybutylene terephthalate, styrol acrylonitrile, polyethylene furonate, cellulose ester, polyhydroxylbutanoic acid, polycaprolactone, polybutyrate adipate terephthalate, polybutylene succinate, polyphenylsulfone (PS), polyvinyl acetate, polyvinylidene chloride, acrylonitrile butadiene styrene (ABS), polyether etherketone, epoxy resins, thermoplastic elastomers (TPE-E), thermoplastic copolyamide (TPE-A), thermoplastic polyesterelastomer / thermoplastic copolyester (TPE-E), thermoplastic elastomer on olefinbasis (TPE-O), styrol-blockcopolymers (TPE-S), thermoplastic elastomers on urethanebasis (TPE-U), thermoplastic, cross-linked elastomers on olefinbasis (TPE-V), polybutylene terephthalate (PBT), polytrimethylene terephthalate (PTT) or mixtures thereof.

13. Method according to at least one of the preceding claims, wherein the method comprises oxidizing of at least one surface of the plastic object which was dyed in the dyeing step after the dyeing step is completed.

14. Method according to at least one of the preceding claims, further comprising a step of manufacturing the plastic object by a 3D printing method, preferably by selective laser sintering (SLS), stereolithography (SLA), 3-dimensional inkjet printing, fused deposition modelling (FDM), digital light processing (DLP), Multijet & polyjet process, binder jetting (BJ), selective deposition lamination (SDL), electrobeam melting (EBM), selective laser melting (SLM), laminated object manufacturing (LOM).

15. Method according to claim 14, wherein the at least one dyeing step is performed in a device being part of or directly connected to a device for conducting said 3D printing method.

16. Plastic object, wherein at least one surface has been treated with the method according to at least one of the preceding claims.

17. Plastic object according to claim 16, wherein the plastic object is an object formed by a 3D-printing method, preferably by selective laser sintering (SLS), stereolithography (SLA), 3-dimensional inkjet printing, fused deposition modelling (FDM), digital light processing (DLP), Multijet & polyjet process, binder jetting (BJ), selective deposition lamination (SDL), electrobeam melting (EBM), selective laser melting (SLM), laminated object manufacturing (LOM).

18. Use of at least one sulfur dye or a dyeing solution comprising the at least one sulfur dye for dyeing at least one surface of a plastic object as defined in claim 16 or 17.
